# EUROPEAN PATENT APPLICATION

(11) **EP 2 597 006 A1**
(43) Date of publication of application: **29.05.2013**
(21) Application number: 11809522.3
(22) Date of filing: 20.06.2011
(51) Int. Cl.: B60W 30/14, B60K 31/00, B60T 7/12, B60W 10/18

(54) **TRAVEL CONTROL DEVICE**

(30) Priority: 20.07.2010 JP 2010163170
(71) Applicant: Hitachi Automotive Systems, Ltd., Hitachinaka-shi Ibaraki 312-8503 (JP)
(72) Inventor: KAWAKAMI Tomonori, Hitachinaka-shi Ibaraki 312-8503 (JP)
(74) Representative: MERH-IP Matias Erny Reichl Hoffmann
(86) International application number: PCT/JP2011/064055
(87) International publication number: WO 2012/011348

(57) **Abstract**

In a travel control device, it is allowed to release vehicle speed control without giving a sense of incongruity to a driver when pedal operation of a brake pedal is executed by the driver during vehicle speed control.

When pedal operation of the brake pedal 112 is executed by the driver during control that decelerates vehicle speed by a vehicle speed controlling means, a driver brake fluid pressure Pd generated in a master cylinder 111 by the pedal operation and an actuator brake fluid pressure Pa generated in a brake actuator 121 based on a deceleration command value A of a vehicle speed control unit 131 are compared to each other, and output of the deceleration command value A from the vehicle speed control unit 131 is continued until the driver brake fluid pressure Pd exceeds the actuator brake fluid pressure Pa.

## Description

### Technical Field

The present invention relates to a travel control device that executes travel speed control so as to achieve a predetermined vehicle speed, and releases the travel speed control by pedal operation of a brake pedal by a driver.

### Background Art

A travel speed control device such as an adaptive cruise control system and the like that controls the vehicle speed of an own vehicle according to the vehicle speed of a preceding vehicle is constituted so that, when pedal operation of a brake pedal is executed by a driver, vehicle speed control is released giving priority to operation of the driver (refer to Patent Literature 1 for example).

### Citation List

### Patent Literature

Patent Literature 1: Japanese Unexamined Patent Application Publication No. 2007-161149

### Summary of Invention

### Technical Problem

However, when pedal operation of a brake pedal is executed by a driver in a state control of decelerating the vehicle speed is executed by a travel control device, if there is a difference between a control brake force generated based on a control command value of the travel control device and an operation brake force generated by pedal operation of the brake pedal, there is a risk that a step is generated in connection of the brake force in switching from the control brake force to the operation brake force by release and finish of vehicle sped control and a sense of incongruity is given to the driver.

The present invention has been developed in view of the points described above, and its object is to provide a travel control device that can release vehicle speed control without giving a sense of incongruity to a driver when pedal operation of a brake pedal is executed by the driver during the vehicle speed control.

### Solution to Problem

In a travel control device of the present invention that solves the problem described above, when pedal operation of a brake pedal is executed during control of decelerating the vehicle speed by a vehicle speed controlling means, if an operation brake force by pedal operation is less than a control brake force by the vehicle speed controlling means, control of decelerating the vehicle speed by the vehicle speed controlling means is continued, and, if the operation brake force is equal to or greater than the control brake force, vehicle speed control by the vehicle speed controlling means is released.

### Advantageous Effects of Invention

According to the present invention, when pedal operation of a brake pedal is executed by a driver in a state control of decelerating the vehicle speed is executed by a vehicle speed controlling means, the control of decelerating the vehicle speed is continued by the vehicle speed controlling means until an operation brake force becomes greater than a control brake force when the operation brake force by the pedal operation and the control brake force by the vehicle speed controlling means are compared to each other, therefore generation of a step can be prevented in connection of the brake force at the time of releasing the vehicle speed control, and the vehicle speed control can be released and finished without giving a sense of incongruity to the driver.
Other objects, features and advantages of the present invention will be clarified from description of examples of the present invention below with respect to attached drawings. Brief Description of Drawings

[Fig. 1] Fig. 1 is a drawing showing a constitution of a travel control device of embodiment 1.
[Fig. 2] Fig. 2 is a flowchart explaining a vehicle speed control process in embodiment 1.
[Fig. 3] Fig. 3 is a brake fluid pressure control timing chart at the time of releasing control in embodiment 1.
[Fig. 4] Fig. 4 is an oil-hydraulic circuit diagram explaining a constitution of a brake actuator in embodiment 1.
[Fig. 5] Fig. 5 is a drawing explaining an action of the brake actuator in embodiment 1.
[Fig. 6] Fig. 6 is a control block diagram of a pump motor in embodiment 1.
[Fig. 7] Fig. 7 is a flowchart explaining a vehicle speed control process in embodiment 2.
[Fig. 8] Fig. 8 is a brake fluid pressure control timing chart at the time of releasing control in embodiment 2.
[Fig. 9] Fig. 9 is a flowchart explaining a vehicle speed control process in embodiment 3.
[Fig. 10] Fig. 10 is a brake fluid pressure control timing chart at the time of releasing control in embodiment 3.
[Fig. 11] Fig. 11 is a drawing showing a constitution of a travel control device in embodiment 4.
[Fig. 12] Fig. 12 is a drawing explaining a calculation process of a deceleration command value in embodiment 4.
[Fig. 13] Fig. 13 is a flowchart explaining a vehicle speed control process in embodiment 4.
[Fig. 14] Fig. 14 is a brake fluid pressure control timing chart at the time of releasing control in embodiment 4.
[Fig. 15] Fig. 15 is a drawing showing a constitution of a travel control device in embodiment 5.
[Fig. 16] Fig. 16 is a drawing showing a function constitution of a brake actuator in embodiment 5.
[Fig. 17] Fig. 17 is a flowchart explaining a vehicle speed control process in embodiment 5.

### Description of Embodiments

### Embodiment 1

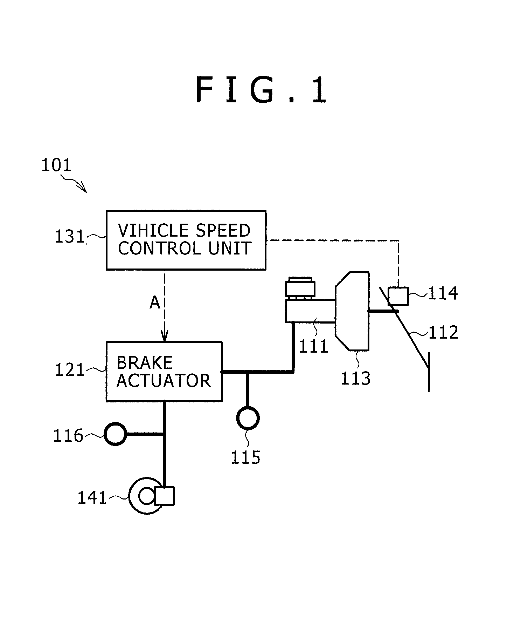

Fig. 1 is a drawing explaining a constitution of a travel control device in embodiment 1.
A travel control device 101 is mounted on a vehicle such as an automobile and the like, executes vehicle speed control controlling the vehicle speed of an own vehicle according to a preceding vehicle, and has a constitution of releasing the vehicle speed control by pedal operation of a brake pedal by a driver.

As a concrete constitution of the travel control device 101, as shown in Fig. 1, provided are a vehicle speed control unit 131 that calculates a deceleration command value A that decelerates a vehicle so as to obtain predetermined deceleration at the time of deceleration, a brake actuator (control brake force generating means) 121 that generates brake fluid pressure based on the deceleration command value A outputted from the vehicle speed control unit 131, a master cylinder (operation brake force generating means) 111 that generates brake fluid pressure according to a stepping amount of a brake pedal 112 by pedal operation of the brake pedal 112 by a driver, and a brake 141 that receives supply of the brake fluid pressure from the brake actuator 121 or the master cylinder 111 through a fluid pressure passage and generates a brake force according to the brake fluid pressure.

The master cylinder 111 incorporates a master piston (not shown) therewithin and generates a brake fluid pressure (operation brake force) according to a stroke of the master piston. Between the master cylinder 111 and the brake pedal 112, a brake booster (assistor) 113 is interposed which increases the stepping force of the brake pedal 112. The brake booster 11-3 has a constitution that an input shaft is connected to the brake pedal 112, and, when the driver steps the brake pedal 112, an output shaft moves the master piston of the master cylinder 111. A known one can be used for the brake booster 113, that of a negative pressure type can be used, and that of an electromotive type also can be used.

The brake actuator 121 is interposed between the master cylinder 111 and the brake 141, and is constituted so as to generate a brake fluid pressure (control brake force) by valves of respective wheels, a pump and a pump motor based on the deceleration command value A outputted from the vehicle speed control unit 131.

In the master cylinder 111 or the brake actuator 121, a master cylinder pressure sensor 115 for detecting the brake fluid pressure generated in the master cylinder 111 is arranged. Also, in a fluid pressure passage between the brake actuator 121 and the brake 141, a brake fluid pressure sensor 116 for detecting the brake fluid pressure supplied from the master cylinder 111 and the brake actuator 121 to the brake 141 is arranged.

The brake actuator 121, the master cylinder pressure sensor 115 and the brake fluid pressure sensor 116 described above can be commonly used also as those used in other vehicle control systems known by the names of VDC, TCS, ABS and the like for example.

In a position in the vicinity of the brake pedal 112, a switch (pedal operation detecting means) 114 detecting presence or absence of pedal operation of the brake pedal 112 by the driver is arranged. The switch 114 becomes ON when the brake pedal 112 is stepped, and becomes OFF when a foot is detached from the brake pedal 112. The switch 114 is electrically connected to the vehicle speed control unit 131, and outputs an ON·OFF signal.

The vehicle speed control unit 131 outputs the deceleration command value A to the brake actuator 121 so as to execute deceleration during vehicle speed control, and executes a releasing process of the vehicle speed control when an ON signal of the switch 114 that detects stepping of the brake pedal 112 by the driver is detected while the brake actuator 121 generates a predetermined brake fluid pressure,.

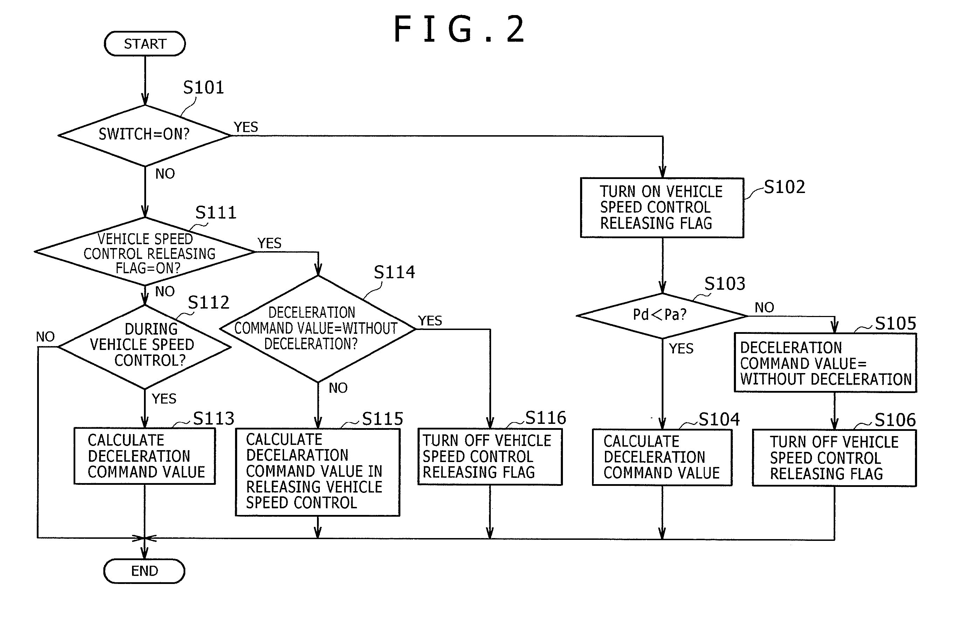

Next, a vehicle speed controlling process in the travel control device 101 will be described using Fig. 2.
First, whether a signal of the switch 114 is ON or not is determined in step S101, and, when it is ON (YES in step S101), it is determined that pedal operation of stepping the brake pedal 112 has been executed by the driver and the process goes to step S102 and subsequent steps so as to execute a vehicle speed control releasing process. Also, a vehicle speed control releasing means is constituted by processing of the step S102 and subsequent steps.

In step S102, a process of making a vehicle speed control release flag that shows whether pedal operation of stepping the brake pedal 112 has been executed or not ON is executed. Also, in step S103, a process is executed for comparing an actuator brake fluid pressure (control brake force) Pa generated in the brake actuator 121 based on the deceleration command value A and a driver brake fluid pressure (operation brake force) Pd generated in the master cylinder 111 by pedal operation of the brake pedal 112 by the driver to each other.

Here, when it is determined that the driver brake fluid pressure Pd is less than the actuator brake fluid pressure Pa (Pd<Pa) (YES in step S103), the process goes to step S104 so as to continue control of decelerating the vehicle speed, and a process is executed for calculating the deceleration command value A by the vehicle speed control unit 131 in a method same to that executed during vehicle speed control. Accordingly, successively, in the brake actuator 121, the actuator brake fluid pressure Pa is generated based on the deceleration command value A calculated in step S104, whereas in the brake 141, a brake force according to such the actuator brake fluid pressure Pa is generated and the control of decelerating the vehicle speed is continued.

On the other hand, when it is determined that the driver brake fluid pressure Pd is equal to or greater than the actuator brake fluid pressure Pa (Pd≥Pa) in step S103 (NO in step S103) , the process goes to step S105 so as to release the vehicle speed control. In step S105, a process of making the deceleration command value A outputted from the vehicle speed control unit 131 "without deceleration" is executed. Accordingly, the actuator brake fluid pressure Pa supplied from the brake actuator 121 to the brake 141 is made 0, and the control of decelerating the vehicle speed is released. Even when the control of decelerating the vehicle speed is released in such a state, the driver brake fluid pressure Pd from the master cylinder 111 is supplied to the brake 141, and an operation brake force according to such the driver brake fluid pressure Pd is generated in the brake 141. That is, a brake pressure sensor value Po of the brake fluid pressure sensor 116 becomes a brake pressure generated by stepping of the brake pedal 112 by the driver. Also, the process goes to step S106, and the process is finished after executing a process of making the vehicle speed control releasing flag OFF in step S106.

Further, when it is determined that the signal of the switch 114 is not ON in step S101 (NO in step S101) , the process goes to step S111 assuming a state pedal operation of the brake pedal 112 is not operated.

In step S111, whether the vehicle speed control releasing flag is ON or not is determined, and, when it is determined that the vehicle speed control releasing flag is OFF (NO in step S111), it is determined to be in a state that the brake pedal 112 has not been operated at all, and the process goes. to step S112 and subsequent steps.

Also, in step 112, whether it is during the vehicle speed control or not is determined. When it is determined to be during the vehicle speed control (YES in step S112), the process goes to S113 so as to continue the vehicle speed control, and a process of calculating the deceleration command value A is executed (vehicle speed controlling means) in step S113. Accordingly, the actuator brake fluid pressure Pa is generated in the brake actuator 121 based on the deceleration command value A calculated in step S113, and a brake force according to such the actuator brake fluid pressure Pa is generated in the brake 141. Also, when it is determined that it is not during the vehicle speed control in step S112 (NO in step S112), other processes are not executed, and the process is finished as it is.

Also, when it is determined that the vehicle speed control releasing flag is ON in step S111 (YES in step S111), it is determined to be in a state that the foot is detached after the brake pedal 112 has been operated once, and the process goes to step S114 and subsequent steps so as to continue the vehicle speed control releasing process.

In step S114, whether the deceleration command value A is made "without deceleration" or not is determined. When it is not "without deceleration" (NO in step S114), that is, when it is still in the middle of deceleration, a deceleration command value calculation process at the time of releasing vehicle speed control is executed in step S115, and a process gradually changing the deceleration command value A to a predetermined command value without deceleration is executed. Accordingly, the actuator brake fluid pressure Pa is gradually decompressed in the brake actuator 121, and in the brake 141, the brake force is gradually weakened according to such variation of the actuator brake fluid pressure Pa.

On the other hand, when it is determined that the deceleration command value A is "without deceleration" in step S114 (YES in step S114), the process goes to step S116, and the process is finished after a process of making the vehicle speed control releasing flag OFF is executed in step S116. Accordingly, the actuator brake fluid pressure Pa supplied from the brake actuator 121 to the brake 141 is made 0, the driver brake fluid pressure Pd from the master cylinder 111 is supplied to the brake 141, and the brake force according to such the driver brake fluid pressure Pd is generated in the brake 141.

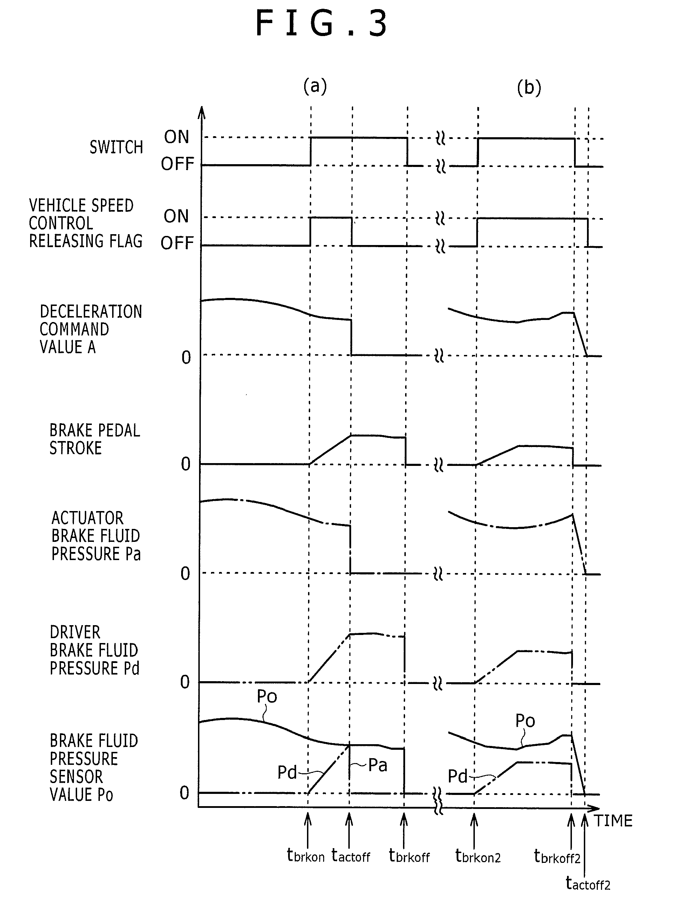

Next, contents of actions achieved by execution of the vehicle speed control processes described in Fig. 2 above will be described by a timing chart shown in Fig. 3.

Fig. 3 (a) shows a case the brake pedal 112 is stepped until the driver brake fluid pressure Pd exceeds the actuator brake fluid pressure Pa, and Fig. 3 (b) shows a case the stepping amount of the brake pedal 112 is small and the driver brake fluid pressure Pd does not exceed the actuator brake fluid pressure Pa.

First, the case shown in Fig. 3 (a) will be described. Here, a state is made a premise in which control of decelerating the vehicle speed is executed by the vehicle speed control unit 131, and the actuator brake fluid pressure Pa is generated in the brake actuator 121 based on the deceleration command value A outputted from the vehicle speed control unit 131 and is supplied to the brake 141.

Also, when pedal operation of the brake pedal 112 is executed by the driver at time t_{brkon} and a signal of the switch 114 becomes ON from OFF, the vehicle speed control releasing flag is switched from OFF to ON (refer to step S101 and step S102). Further, the driver brake fluid pressure Pd is generated in the master cylinder 111 according to the pedal stroke of the brake pedal 112.

The driver brake fluid pressure Pd and the actuator brake fluid pressure Pa are compared to each other. While the driver brake fluid pressure Pd is less than the actuator brake fluid pressure Pa (Pd<Pa), the deceleration command value A is calculated in the vehicle speed control unit 131 (refer to steps S103, S104 of Fig. 2). Also, the brake actuator 121 generates the actuator brake fluid pressure Pa based on the deceleration command value A calculated, and control of decelerating the vehicle speed by the vehicle speed control unit 131 is continued.

Further, when the driver brake fluid pressure Pd becomes equal to or greater than the actuator brake fluid pressure Pa at time t_{actoff}, a predetermined command value without deceleration is outputted from the vehicle speed control unit 131 as the deceleration command value A, and the brake actuator 121 decompresses the actuator brake fluid pressure Pa according to the deceleration command value A (refer to step S105 of Fig. 2).

The brake fluid pressure supplied to the brake 141 becomes a greater one of the driver brake fluid pressure Pd and the actuator brake fluid pressure Pa, and the brake fluid pressure is not decompressed even when the vehicle speed control is released as shown between time t_{actoff} and time t_{brkoff} in the brake fluid pressure sensor value Po of Fig. 3 (a).

Also, at the time t_{brkoff}, the driver detaches the foot from the brake pedal 112, the brake pedal stroke becomes 0 and the brake fluid pressure sensor value Po becomes 0 (refer to steps S101, S111, S112 of Fig. 2).

Next, a case will be described in which the stepping amount of the brake pedal 112 by the driver is small as shown in Fig. 3 (b).

From a premise state same to that of Fig. 3 (a), when pedal operation of the brake pedal 112 is executed by the driver at time t_{brkon2} and a signal of the switch 114 becomes ON from OFF at time t_{brkon2}, the vehicle speed control releasing flag is switched from OFF to ON (refer to steps S101, S102). Further, the driver brake fluid pressure Pd is generated in the master cylinder 111 according to the pedal stroke of the brake pedal 112.

Also, the driver brake fluid pressure Pd and the actuator brake fluid pressure Pa are compared to each other. While the driver brake fluid pressure Pd is less than the actuator brake fluid pressure Pa (Pd<Pa), the deceleration command value A is calculated in the vehicle speed control unit 131 (refer to steps S103, S104), the brake actuator 121 generates the actuator brake fluid pressure Pa based on the deceleration command value A calculated, and control of decelerating the vehicle speed by the vehicle speed control unit 131 is continued.

Further, when the driver detaches the foot from the brake pedal 112 and the switch 114 is switched from ON to OFF at time t_{brkoff2}, because the vehicle speed control releasing flag remains unchanged at ON, a process of changing the deceleration command value A to a predetermined command value without deceleration at a predetermined inclination is executed (refer to steps S111, S114, S115).

The brake fluid pressure supplied to the brake 141 is gradually reduced by detaching the foot from the brake pedal 112 as shown as the brake fluid pressure sensor value Po. Further, when the deceleration command value A becomes the predetermined command value without deceleration at time t_{actoff2}, the control releasing flag is changed from ON to OFF, (refer to step S116).

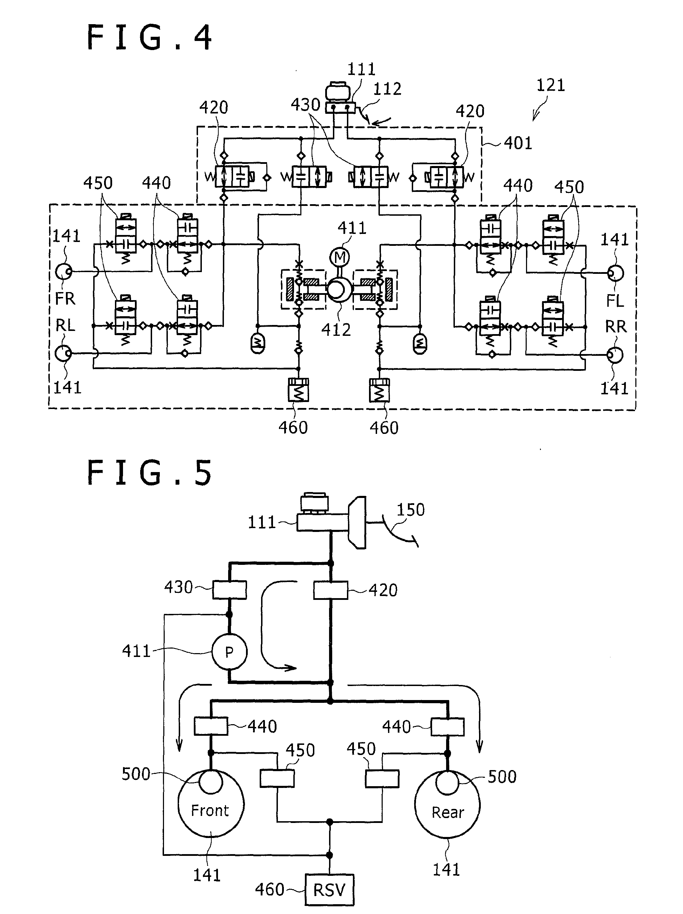

Next, actions of the brake actuator 121 that acts based on the deceleration command value A will be described using Fig. 4-Fig. 6.

Fig. 4 is a hydraulic pressure circuit diagram explaining a constitution of the brake actuator.
As shown in Fig. 4, the brake actuator 121 includes a brake fluid pressure drive unit 401. The brake fluid pressure drive unit 401 is composed of a plunger pump 412 driven by a pump motor 411 and plural valves 420, 430, 440, 450 that control flow-in direction of pressure fluid such as brake fluid and the like (hereinafter referred to as pressure oil) discharged from the plunger pump 412 to the brake 141.

A hydraulic pressure circuit of the brake fluid pressure drive unit 401 is formed of 2 series, and they correspond to X piping. Accordingly, the brakes 141 of an FL wheel and an RR wheel are connected to a primary series, and the brakes 141 of an FR wheel and an RL wheel are connected to a secondary series. With regard to respective valves, the valve G/V_OUT 420 and the valve W/C_IN 440 have a constitution of normal open (N/O), and the valve G/V_IN 430 and the valve W/C_OUT 450 have a constitution of normal close (N/C).

Fig. 5 is a drawing explaining actions of the brake fluid pressure drive unit.
When a brake force is to be generated, the brake fluid pressure drive unit 401 makes the valve G/V_IN 430 ON (opened state), the valve G/V_OUT 420 ON (closed state · a holding current is controlled according to the fluid pressure), the valve W/C_IN 440 OFF (opened state), the valve W/C_OUT 450 OFF (closed state), and the pump motor 411 ON (pressure increase inclination is controlled by motor revolution speed), thereby the pressure oil inside the master cylinder 111 is made flow in to a brake caliper 500, and pressure increase of an actual brake fluid pressure is executed. The pump motor 411 is controlled according to the deceleration command value A outputted from the vehicle speed control unit 131. Thereby, deceleration of the vehicle by a brake action of the brake 141 is set variably.

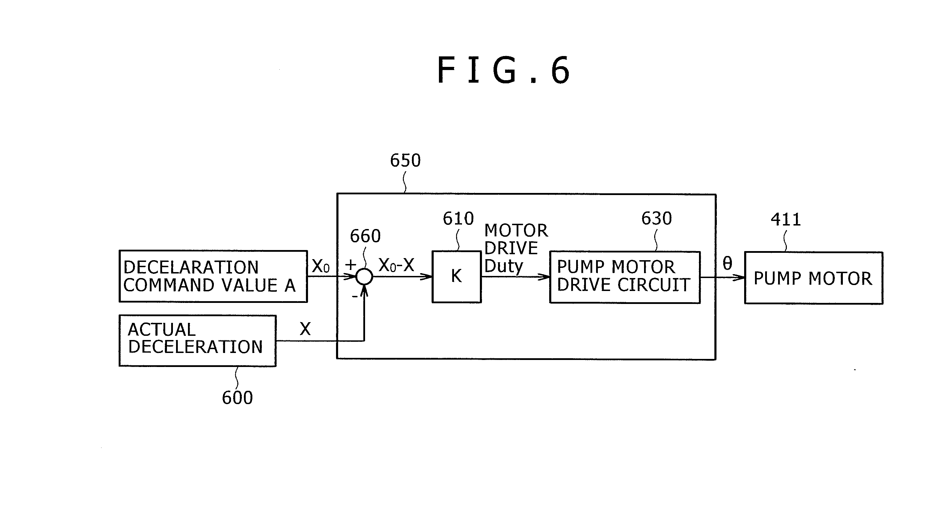

Fig. 6 shows a servo control system of the pump motor 411. A servo controller 650 of the pump motor 411 makes the deceleration command value A an input Xo, makes actual deceleration of the vehicle an input X, and includes a calculator 660 that calculates deviations of them, a gain setter 610, and a pump motor drive circuit 630.

The servo controller 650 obtains a motor drive Duty that is a duty ratio of a voltage waveform applied to the pump motor 411 by multiplying a deviation of the input Xo that is the deceleration command value A and the input X that is the actual deceleration of the vehicle (Xo-X) with a gain K by the gain setter 610, inputs the same to the pump motor drive circuit 630, and gives a voltage waveform θ according to the motor drive Duty to the pump motor 411 by the pump motor drive circuit 630. By the brake actuator 121 shown above, brake control is executed which makes the deceleration command value A and the actual deceleration agree with each other.

According to the travel control device 101 of the present example described above, when pedal operation of the brake pedal 112 is executed by the driver during vehicle speed control of decelerating the vehicle speed by the vehicle speed control unit 131, the driver brake fluid pressure Pd generated by pedal operation of the brake pedal 112 by the driver and the actuator brake fluid pressure Pa generated based on the deceleration command value A from the vehicle speed control unit 131 are compared to each other.

Also, when the driver brake fluid pressure Pd is less than the actuator brake fluid pressure Pa, vehicle speed control of decelerating the vehicle speed by the vehicle speed control unit 131 is continued, and, when the driver brake fluid pressure Pd is equal to or greater than the actuator brake fluid pressure Pa, the vehicle speed control by the vehicle speed control unit 131 is finished.

Accordingly, even when pedal operation of the brake pedal 112 is executed during deceleration by vehicle speed control, while an operation brake force by the brake pedal 112 is less than a control brake force by the brake actuator 121 due to a reason that the stepping amount of the brake pedal 112 is small and the like, vehicle speed control of decelerating the vehicle speed by the vehicle speed control unit 131 is executed continuously, and deceleration is executed by the control brake force.

Also, at a time point the operation brake force of the brake pedal 112 agrees with the control brake force of the brake actuator 121, vehicle speed control by the vehicle speed control unit 131 is finished, and deceleration by the operation brake force comes to be executed. Accordingly, generation of a step in connection of the brake force can be prevented, and vehicle speed control can be finished without giving a sense of incongruity to the driver.

Different from that having a constitution in which the pedal position of the brake pedal moves according to change of the brake fluid pressure such as an active brake booster for example which drives a master cylinder based on a deceleration command value outputted from a vehicle speed control unit, in a case of the brake actuator 121 composed of the valves of respective wheels, the pump, and the pump motor as in the present example, even when the brake fluid pressure is changed, the pedal position of the brake pedal does not move.

Therefore, in the travel control device according to prior arts which includes such a brake actuator, because vehicle speed control is released even when the brake pedal is stepped only slightly, a large control brake force by the brake actuator is switched to a small operation brake force based on the stepping force amount of the brake pedal, and there was a risk of making the driver feel interruption of deceleration.

With respect to such problem, in the travel control device 101 of the present invention, even when pedal operation of the brake pedal is executed during control of decelerating the vehicle speed by the vehicle speed control unit 131, while the driver brake fluid pressure Pd is less than the actuator brake fluid pressure Pa, vehicle speed control of decelerating the vehicle speed by the vehicle speed control unit 131 is continued, and the vehicle speed control by the vehicle speed control unit 131 is released at a time point the driver brake fluid pressure Pd agrees with the actuator brake fluid pressure Pa, and therefore the driver can be prevented from feeling interruption of deceleration.

Also, in the travel control device 101 of the present invention, pedal operation of the brake pedal 112 was executed during the vehicle speed control, however, when the driver brake fluid pressure Pd has not reached the actuator brake fluid pressure Pa, the deceleration command value A is changed so that the actuator brake fluid pressure Pa gradually reduces and the vehicle speed control is released, and therefore the vehicle speed control can be released without giving the driver a sense of incongruity.

According to the present example, control of decelerating the vehicle speed is continued from the time the driver steps the brake pedal 112 and starts the vehicle speed control releasing process until the time the driver brake fluid pressure Pd exceeds the actuator brake fluid pressure Pa, and therefore vehicle speed control can be released without giving the driver a sense of incongruity of interruption of deceleration when switching takes place from the actuator brake fluid pressure Pa to the driver brake fluid pressure Pd by release of the vehicle speed control.

### Embodiment 2

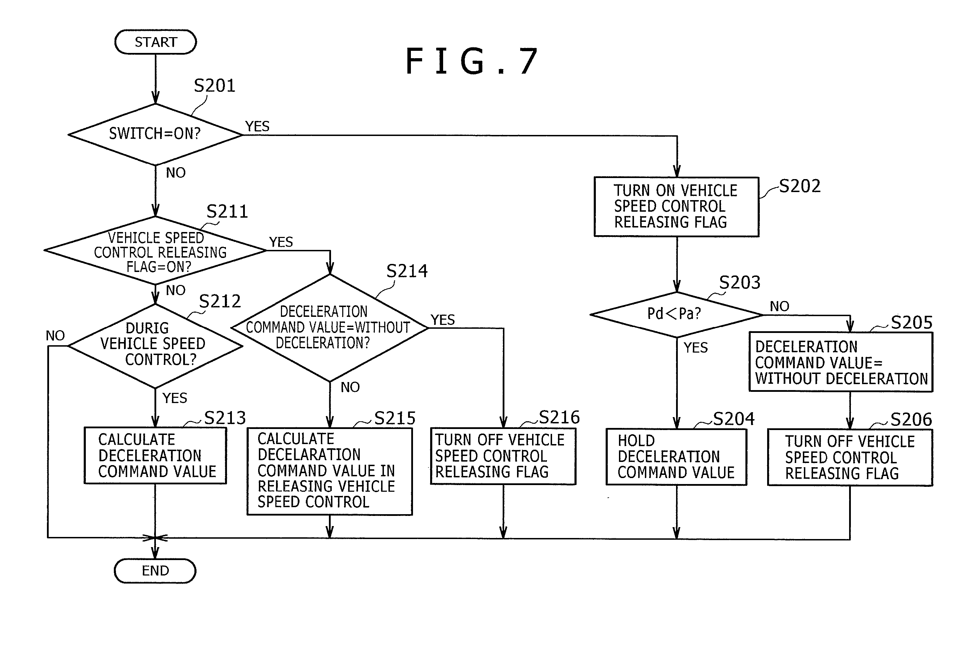

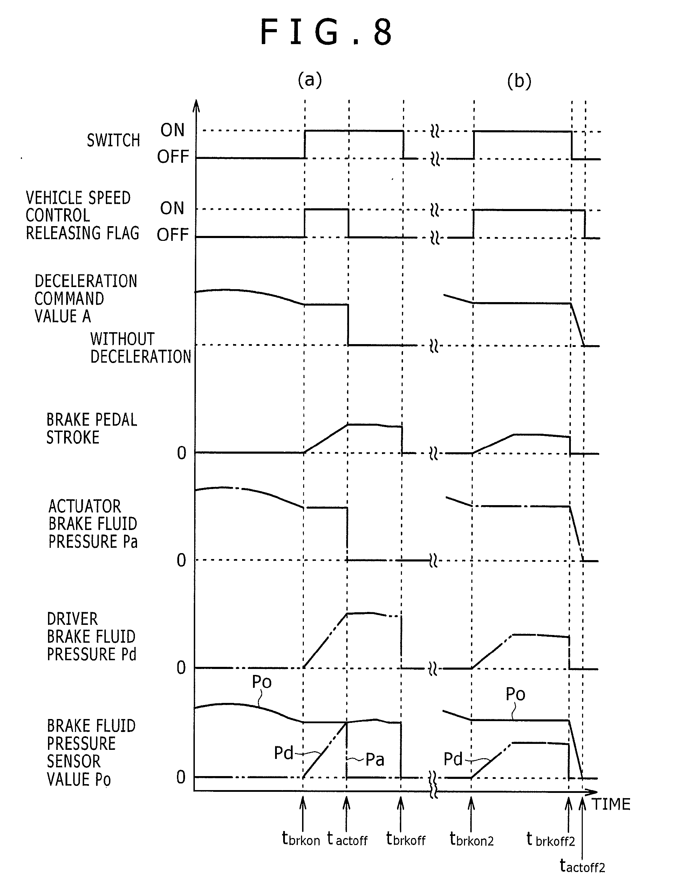

Next, embodiment 2 will be described below using Fig. 7, Fig. 8.
Fig. 7 is a flowchart explaining a vehicle speed control releasing process in embodiment 2.
What is characteristic in the present example is that in a constitution same to that of embodiment 1, it is constituted that a process of holding the deceleration command value A of the vehicle speed control unit 131 is executed when pedal operation of the brake pedal 112 by the driver is executed during vehicle speed control and the driver brake fluid pressure Pd is less than the actuator brake fluid pressure Pa.

In embodiment 1 described above, in such a case, the deceleration command value A is calculated by the vehicle speed control unit 131 and the vehicle speed control is executed based on the deceleration command value A calculated (refer to step S104 of Fig. 2), however, in the present example, as shown in step S204 of Fig. 7, a process is executed for holding the deceleration command value A at a value immediately before the pedal operation is executed.

Next, contents of actions achieved by execution of the vehicle speed controlling process described in Fig. 7 above will be described by a timing chart shown in Fig. 8.

Fig. 8 (a) shows a case the brake pedal 112 is stepped until the driver brake fluid pressure Pd exceeds the actuator brake fluid pressure Pa, and Fig. 8 (b) shows a case the stepping amount of the brake pedal 112 is small and the driver brake fluid pressure Pd does not exceed the actuator brake fluid pressure Pa.

First, a case shown in Fig. 8 (a) will be described. On a premise condition same with that of embodiment 1, when pedal operation of the brake pedal 112 is executed by the driver at time t_{brkon} and a signal of the switch 114 becomes ON from OFF, the vehicle speed control flag is switched from OFF to ON, and the driver brake fluid pressure Pd is generated in the master cylinder 111 according to the brake pedal stroke.

Also, the driver brake fluid pressure Pd and the actuator brake fluid pressure Pa are compared to each other. While the driver brake fluid pressure Pd is less than the actuator brake fluid pressure Pa, a process is executed for holding the deceleration command value A at a value immediately before the vehicle speed controlling flag is switched from OFF to ON, that is, a value immediately before pedal operation is executed. Accordingly, a constant actuator brake fluid pressure Pa is outputted from the brake actuator 121, and control of decelerating the vehicle speed by the vehicle control unit 131 is continued.

Further, when the driver brake fluid pressure Pd becomes equal to or greater than the actuator brake fluid pressure Pa at time t_{actoff}, a predetermined command value without deceleration is outputted from the vehicle speed control unit 131 as the deceleration command value A, and the brake actuator 121 decompresses the actuator brake fluid pressure Pa according to the deceleration command value A.

The brake fluid pressure supplied to the brake 141 becomes a greater one of the driver brake fluid pressure Pd and the actuator brake fluid pressure Pa, and the brake fluid pressure is not decompressed even after the vehicle speed control is released as shown between time t_{actoff} and time t_{brkon} in the brake fluid pressure sensor value Po of Fig. 8 (a). Also, at the time t_{brkoff}, the driver detaches the foot from the brake pedal 112, the brake pedal stroke becomes 0, and the brake fluid pressure sensor value Po becomes 0.

Next, a case will be described in which the stepping amount of the brake pedal 112 by the driver is small as shown in Fig. 8 (b) .

From a premise condition same to that of Fig. 8 (a), when pedal operation of the brake pedal 112 is executed by the driver and a signal of the switch 114 becomes ON from OFF at time t_{brkon2}, the vehicle speed control releasing flag is switched from OFF to ON. Also, the driver brake fluid pressure Pd and the actuator brake fluid pressure Pa are compared to each other. While the driver brake fluid pressure Pd is less than the actuator brake fluid pressure Pa, a process is executed for holding the deceleration command value A at a value immediately before the vehicle speed control releasing flag is switched from OFF to ON, that is, at a value immediately before pedal operation is executed. Accordingly, a constant actuator brake fluid pressure Pa is outputted from the brake actuator 121, and control of decelerating the vehicle speed by the vehicle control unit 131 is continued.

Further, when the driver detaches the foot from the brake pedal 112 and the switch 114 is switched from ON to OFF at time t_{brkoff2}, because the vehicle speed control releasing flag remains unchanged at ON, a process of changing the deceleration command value A to a predetermined command value without deceleration at a predetermined inclination is executed.

The brake fluid pressure supplied to the brake 141 is gradually reduced by detaching the foot from the brake pedal 112 as shown as the brake fluid pressure sensor value Po. Further, when the deceleration command value A becomes the predetermined command value without deceleration at time t_{actoff2}, the control releasing flag is changed from ON to OFF.

According to the present example, because the deceleration command value A immediately before stepping the brake pedal is held and is supplied to the brake actuator 121 even after the driver steps the brake pedal 112, generation of a feeling of interruption of deceleration when switching takes place from the actuator brake fluid pressure Pa to the driver brake fluid pressure Pd by release of the vehicle speed control can be suppressed. Also, by holding the deceleration command value A immediately before stepping the brake pedal, it is possible to make the driver feel insufficiency of the brake force, and it is possible to promote pedal adjustment of the brake pedal 112 by the driver.

### Embodiment 3

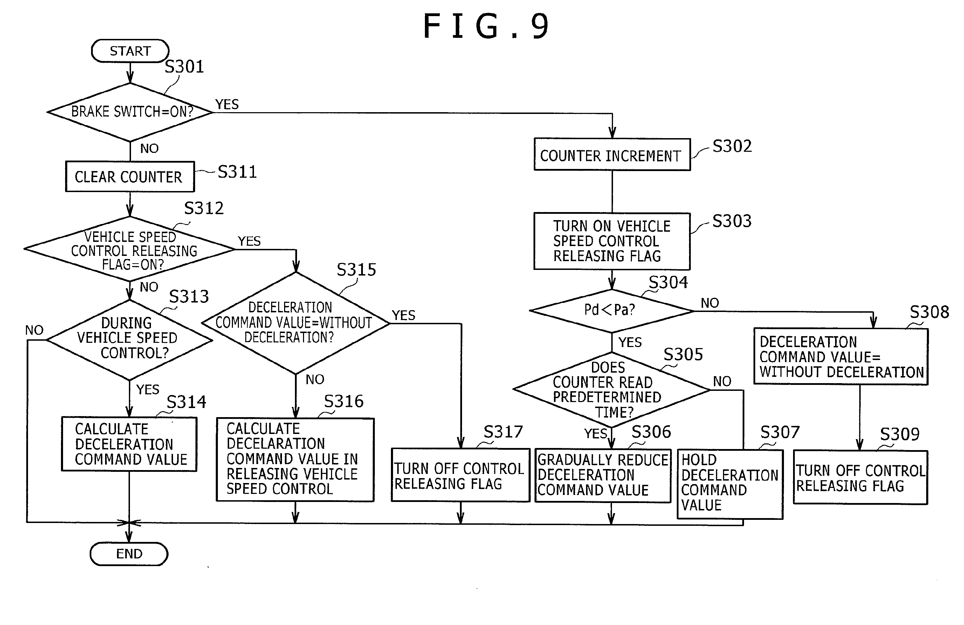

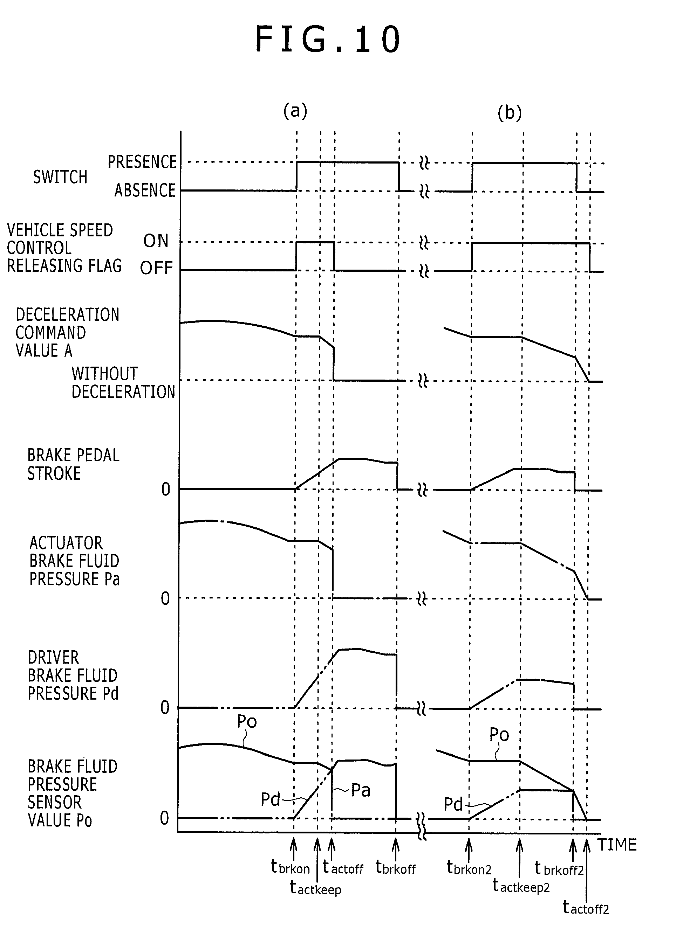

Next, embodiment 3 will be described below using Fig. 9, Fig. 10.
Fig. 9 is a flowchart showing contents of a deceleration command value calculation process in embodiment 3. Detailed description thereof will be omitted by attaching same reference signs to constitution elements similar to those of embodiment 2.

What is characteristic in the present example is that in a constitution same to that of embodiment 2, it is constituted that a process of holding the deceleration command value A until elapsed time elapses after start of pedal operation and changing the deceleration command value A so that the actuator brake fluid pressure Pa reduces gradually after predetermined time has elapsed is executed when pedal operation of the brake pedal 112 by the driver is executed during vehicle speed control and the driver brake fluid pressure Pd is less than the actuator brake fluid pressure Pa.

When a signal of the switch 114 is determined to be ON in step S301, a counter increment process for measuring the elapsed time after pedal operation is executed (ON time of the switch 114) is executed in step S302. Also, when the signal of the switch 114 is determined to be OFF in step S301, a counter clear process that clears the count is executed in step S311.

When the counter increment process is executed in step S302, a process of making the vehicle speed control releasing flag ON is executed in step S303, and a process of comparing the actuator brake fluid pressure Pa and the driver brake fluid pressure Pd to each other is executed in step S304.

Here, when it is determined that the driver brake fluid pressure Pd is less than the actuator brake fluid pressure Pa (YES in step S304), a process is executed in step S305 for comparing the elapsed time and a predetermined time set in advance to each other and determining whether the elapsed time is longer than the predetermined time or not.

Also, when the elapsed time is shorter than the predetermined time (NO in step S305), it is determined that the predetermined time has not elapsed, the process goes to step S307, and a deceleration command value holding process is executed in step S307. In the deceleration command value holding process of step S307, a process is executed for holding the deceleration command value A at a value immediately before the vehicle speed control flag is switched from OFF to ON, that is, a value immediately before pedal operation is executed.

On the other hand, when the elapsed time is equal to or longer than the predetermined time, it is determined that the predetermined time has elapsed, the process goes to step S306, and a process is executed in step S306 for changing the deceleration command value A so that the actuator brake fluid pressure Pa gradually reduces (deceleration command value gradually reducing process). By the deceleration command value gradually reducing process, the actuator brake fluid pressure Pa by a brake actuator 122 is gradually reduced. Also, because processes other than the steps described above are similar to those of embodiment 2, detailed description thereof will be omitted.

Next, contents of actions achieved by execution of the vehicle speed controlling process described in Fig. 9 will be described by a timing chart shown in Fig. 10.

Fig. 10 (a) shows a case the brake pedal 112 is stepped until the driver brake fluid pressure Pd exceeds the actuator brake fluid pressure Pa, and Fig. 10 (b) shows a case the stepping amount of the brake pedal 112 is small and the driver brake fluid pressure Pd does not exceed the actuator brake fluid pressure Pa.

First, a case shown in Fig. 10 (a) will be described. On a premise condition same with that of embodiment 1, when pedal operation of the brake pedal 112 is executed by the driver at time t_{brkon} and a signal of the switch 114 becomes ON from OFF by the switch 114, the counter increment process is executed. Also, the vehicle speed control flag is switched from OFF to ON, and the driver brake fluid pressure Pd and the actuator brake pressure Pa are compared to each other.

From the time t_{brkon} to time t_{actkeep}, the driver brake fluid pressure Pd is less than the actuator brake pressure Pa and the elapsed time is shorter than the predetermined time, and therefore a process is executed for holding the deceleration command value A at a value immediately before the vehicle speed controlling flag is switched from OFF to ON, that is, a value immediately before pedal operation is executed.

Also, at the time t_{actkeep}, the elapsed time becomes equal to or greater than the predetermined time, and the deceleration command value gradually reducing process that gradually reduces the deceleration command value A to the predetermined command value without deceleration is started. Also, at time t_{actoff}, the driver brake fluid pressure Pd becomes equal to or greater than the actuator brake fluid pressure Pa, the predetermined command value without deceleration is outputted from the vehicle speed control unit 131 as the deceleration command value A (refer to step S508), and the brake actuator 121 decompresses the actuator brake fluid pressure Pa according to the deceleration command value A.

The brake fluid pressure supplied to the brake 141 becomes a greater one of the driver brake fluid pressure Pd and the actuator brake fluid pressure Pa, and the brake fluid pressure is not decompressed even after the vehicle speed control is released as shown between time t_{actoff} and time t_{brkoff} in the brake fluid pressure sensor value Po of Fig. 10 (a). Also, at the time t_{brkoff}, the driver detaches the foot from the brake pedal 112, the brake pedal stroke becomes 0, and the brake fluid pressure sensor value Po becomes 0.

Next, a case a pedal stepping amount of the brake pedal 112 by the driver is small as shown in Fig. 10 (b) will be described.

From a premise condition same to that of Fig. 10 (a), when pedal operation of the brake pedal 112 is executed by the driver and a signal of the switch 114 becomes ON from OFF at time t_{brkon2}, the vehicle speed control releasing flag is switched from OFF to ON. Also, the driver brake fluid pressure Pd and the actuator brake fluid pressure Pa are compared to each other. While the driver brake fluid pressure Pd is less than the actuator brake fluid pressure Pa, the deceleration command value A is held at a value immediately before the vehicle speed control releasing flag is switched from OFF to ON, that is, a value immediately before pedal operation is executed. Accordingly, a constant actuator brake fluid pressure Pa is outputted from the brake actuator 121, and control of decelerating the vehicle speed by the vehicle control unit 131 is continued.

Also, at time t_{actkeep2}, the elapsed time become equal to or greater than the predetermined time, and a gradually reducing process that gradually reduces the deceleration command value A to the predetermined command value without deceleration is started. Also, due to gradual reduction of the deceleration command value A, the actuator brake pressure Pa is gradually reduced, and the brake fluid pressure sensor value Po is also gradually reduced accompanying it.

Further, when the driver detaches the foot from the brake pedal 112 and the switch 114 is switched from ON to OFF at time t_{brkoff2}, because the vehicle speed control releasing flag remains unchanged at ON, a process of changing the deceleration command value A to the predetermined command value without deceleration at a predetermined inclination is executed.

The brake fluid pressure supplied to the brake 141 is gradually reduced by detaching the foot from the brake pedal 112 as shown as the brake fluid pressure sensor value Po. Further, when the deceleration command value A becomes the predetermined command value without deceleration at time t_{actoff2}, the control releasing flag is changed from ON to OFF.

According to the present example, because the deceleration command value A immediately before stepping the brake pedal 112 is held by the predetermined time even after the driver steps the brake pedal 112 and the deceleration command value A is thereafter changed so that the actuator brake fluid pressure Pa gradually reduces, generation of feeling of interruption of deceleration in releasing the vehicle speed control is suppressed, increase of stepping of the brake pedal 112 is promoted to the driver accompanying reduction of the control brake force, finish of actions of the brake actuator 121 is made earlier, and load of the brake actuator 121 can be reduced.

### Embodiment 4

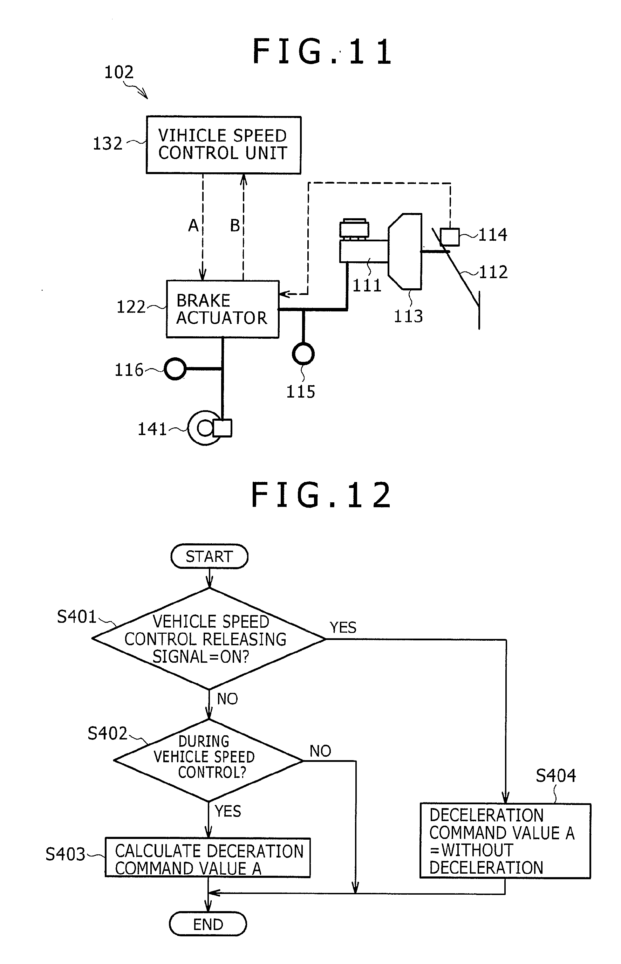

Next, embodiment 4 will be described below using Fig. 11-Fig. 14.
Fig. 11 is a drawing explaining a constitution of a travel control device in embodiment 4. Detailed description thereof will be omitted by attaching same reference signs to constitution elements similar to those of embodiment 1.

What is characteristic in the present example is that it is constituted that a release determining process of the vehicle speed control by pedal operation of the brake pedal 112 is executed by the brake actuator 122. Thereby, the present example can be implemented easily utilizing existing constitutions.

The switch 114 of a travel control device 102 is connected to the brake actuator 122 and outputs an ON·OFF signal. The brake actuator 122 includes a vehicle speed control release determining means that executes a release determining process of the vehicle speed control based on a signal of the switch 114, and outputs the determination result to a vehicle speed control unit 132 as a vehicle speed control releasing signal B. In the vehicle speed control unit 132, the deceleration command value A is calculated based on the vehicle speed control releasing signal B received from the vehicle speed control release determining means of the brake actuator 122, and the deceleration command value A is outputted to the brake actuator 122.

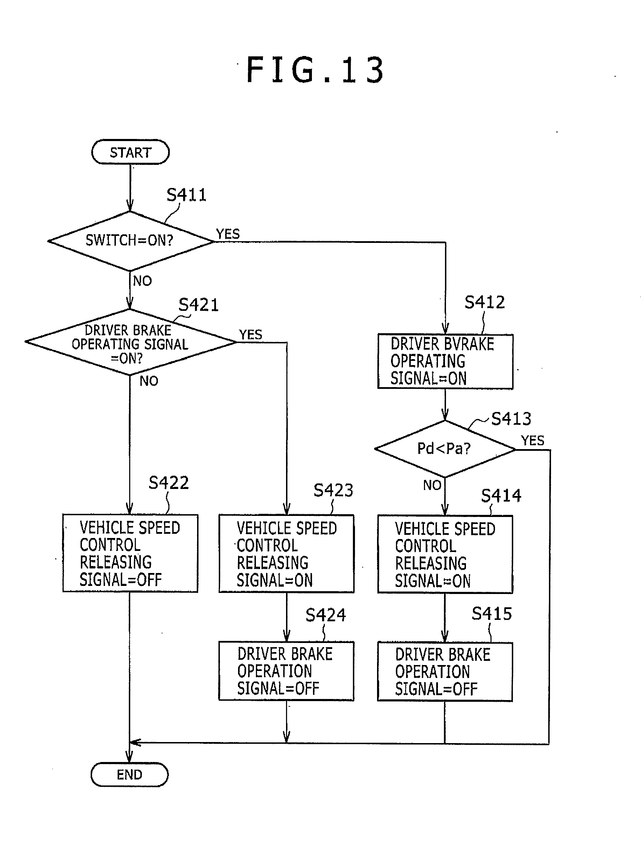

Next, a releasing process of the vehicle speed control in the travel control device 102 will be described using Fig. 12 and Fig. 13.

Fig. 12 is a flowchart explaining contents of a vehicle speed control process in the vehicle speed control unit 132, and Fig. 13 is a flowchart explaining contents of a vehicle speed control release determining process in the brake actuator 122.

As shown in Fig. 12, in the vehicle speed control unit 132, whether the vehicle speed control releasing signal B transmitted from the brake actuator 122 is ON or not is determined. The vehicle speed control releasing signal B is a signal that shows whether the vehicle speed control in the vehicle speed control unit 132 is to be released or not. When the vehicle speed control releasing signal B is ON, the process goes to step S404, and a process of setting the deceleration command value A to the determined command value without deceleration is executed so as to release vehicle speed control.

Also, when the vehicle speed control releasing signal B is not ON, that is, when the vehicle speed control releasing signal B is OFF, the process goes to step S402, and whether it is in the middle of vehicle speed control or not is determined. Further, when it is in the middle of vehicle speed control (YES in step S402), the process goes to step S403, a process of calculating the deceleration command value A is executed, and, when it is not in the middle of the vehicle speed control (NO in step S402), the process is finished without doing anything.

As shown in Fig. 13, in the brake actuator 122, whether a detection signal of the switch 114 is ON or not is determined in step S411. When it is ON (YES in step S411), it is determined that pedal operation of stepping the brake pedal 112 has been executed by the driver, and the process goes to step S412 and subsequent steps.

In step S412, a process of making a driver brake operation signal ON is executed. Also, in step S413, a process of comparing the actuator brake fluid pressure Pa and the driver brake fluid pressure Pd to each other is executed.

Further, when it is determined that the driver brake fluid pressure Pd is less than the actuator brake fluid pressure Pa (Pd<Pa) (YES in step S413), the process is finished as it is. Accordingly, in the brake actuator 122, the actuator brake fluid pressure Pa is generated based on the deceleration command value A calculated in the vehicle speed control unit 132, whereas in the brake 141, a brake force according to such the actuator brake fluid pressure Pa is generated.

On the other hand, when it is determined that the driver brake fluid pressure Pd is equal to or greater than the actuator brake fluid pressure Pa (Pd≥Pa) (YES in step S413), the process goes to step S414, and a process of making the vehicle speed control releasing signal B ON is executed.

When the vehicle speed control releasing signal B is made ON in step S414, in the vehicle speed control unit 132, the deceleration command value A is set to the predetermined command value without deceleration (refer to steps S401, S404) . Accordingly, the actuator brake fluid pressure Pa supplied from the brake actuator 121 to the brake 141 is made 0, however, to the brake 141, the driver brake fluid pressure Pd from the master cylinder 111 is supplied, and a brake force according to such the driver brake fluid pressure Pd is generated in the brake 141. Also, the process goes to step S415, and the process is finished after a process of making the driver brake operation signal OFF is executed in step S415.

Also, when it is determined that the detection signal of the switch 114 is not ON in step S411 (NO in step S411), the process goes to step S421, and whether the driver brake operation signal is ON or not is determined.

Here, when it is determined that the driver brake operation signal is OFF (NO in step S421), the process goes to step S422, and a process of making the vehicle speed control releasing signal B OFF is executed. When the vehicle speed control releasing signal B is made OFF in step S422, in the vehicle speed control unit 132, whether it is in the middle of vehicle speed control or not is determined, and, when it is in the middle of vehicle speed control, the deceleration command value A is calculated and is outputted to the brake actuator 122 (refer to steps S402, S403). Accordingly, in the brake actuator 122, when it is in the middle of vehicle speed control, vehicle speed control is executed based on the deceleration command value A, whereas when it is not in the middle of vehicle speed control, nothing is executed.

On the other hand, when it is determined that the detection signal of the switch 114 is ON in step S421 (YES in step S421), the process goes to step S423, and the vehicle speed control releasing signal B is made ON in step S423.

When the vehicle speed control releasing signal B is made ON in step S423, in the vehicle speed control unit 132, the deceleration command value A is made "without deceleration" (refer to steps S401, S404). Accordingly, the actuator brake fluid pressure Pa supplied from the brake actuator 122 to the brake 141 is made 0, however, the driver brake fluid pressure Pd from the master cylinder 111 is supplied to the brake 141, and a brake force according to such the driver brake fluid pressure Pd is generated. Also, the process goes to step S424, and the process is finished after a process of making the driver brake operation signal OFF is executed in step S424.

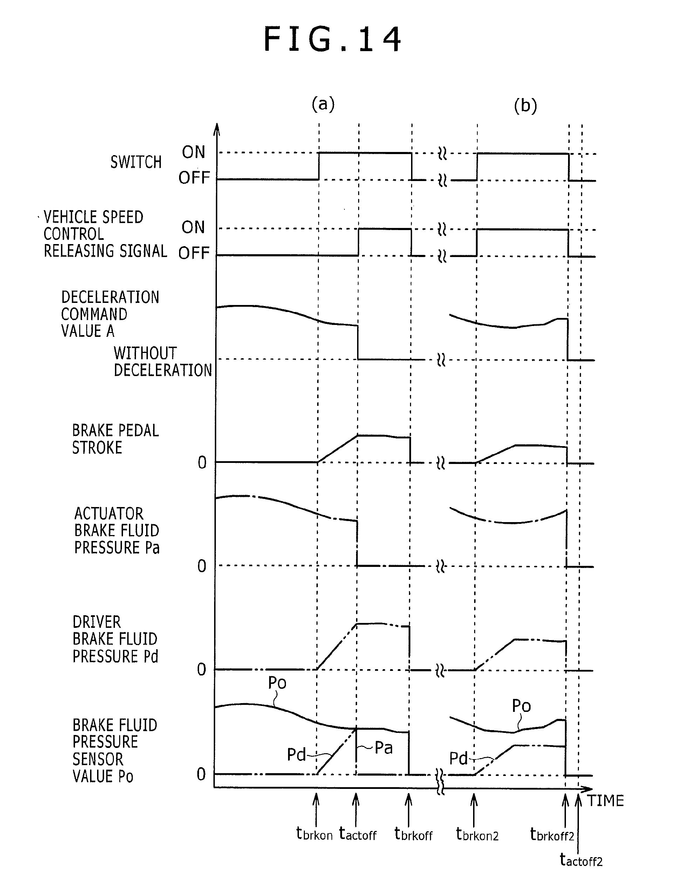

Next, contents of actions achieved by execution of the vehicle speed controlling process described in Fig. 12, Fig. 13 will be described by a timing chart shown in Fig. 14.

Fig. 14 (a) shows a case the brake pedal 112 is stepped until the driver brake fluid pressure Pd exceeds the actuator brake fluid pressure Pa, and Fig. 14 (b) shows a case the stepping amount of the brake pedal 112 is small and the driver brake fluid pressure Pd does not exceed the actuator brake fluid pressure Pa.

First, a case shown in Fig. 14 (a) will be described. Here, a state is made a premise in which control of decelerating the vehicle speed is executed by the vehicle speed control unit 132, and the actuator brake fluid pressure Pa is generated in the brake actuator 122 based on the deceleration command value A outputted from the vehicle speed control unit 132 and is supplied to the brake 141.

Also, when pedal operation of the brake pedal 112 is executed by the driver and a signal of the switch 114 becomes from OFF to ON at time t_{brkon}, the driver brake operation signal is set to ON (refer to steps S411 and S412). Also, the driver brake fluid pressure Pd is generated in the master cylinder 111 according to the pedal stroke of the brake pedal 112.

The driver brake fluid pressure Pd and the actuator brake pressure Pa are compared to each other. While the driver brake fluid pressure Pd is less than the actuator brake fluid pressure Pa (YES in step S413), because the vehicle speed control releasing signal B is OFF, calculation of the deceleration command value A is continued in the vehicle speed control unit 132, and the deceleration command value A is outputted to the brake actuator 122. In the brake actuator 122, the actuator brake fluid pressure Pa according to the deceleration command value A is generated, and control of decelerating the vehicle speed is continued by vehicle speed control.

Further, when the driver brake fluid pressure Pd becomes equal to or greater than the actuator brake fluid pressure Pa (NO in step S413) at time t_{actoff}, the vehicle speed control releasing signal B becomes ON from OFF, and the predetermined command value without deceleration is outputted from the vehicle speed control unit 132 as the deceleration command value A (refer to step S414). Therefore, the brake actuator 122 decompresses the actuator brake fluid pressure Pa according to the deceleration command value A.

The brake fluid pressure supplied to the brake 120 becomes a greater one of the driver brake fluid pressure Pd and the actuator brake fluid pressure Pa, and the brake fluid pressure is not decompressed even when the vehicle speed control is released as shown between time t_{actoff} and time t_{brkoff} in the brake fluid pressure sensor value Po of Fig. 14 (a).

Also, at the time t_{brkoff}, when the driver detaches the foot from the brake pedal 112 and the pedal stroke of the brake pedal 112 becomes 0, the brake fluid pressure sensor value Po becomes 0 and the vehicle speed control releasing signal becomes OFF (refer to steps S411, S421, S422).

Next, a case will be described in which the stepping amount of the brake pedal 112 by the driver is small as shown in Fig. 14 (b).

From a premise state same to that of Fig. 14 (a), when pedal operation of the brake pedal 112 is executed by the driver and a signal of the switch 114 becomes ON from OFF at time t_{brkon2}, the drive brake operation signal becomes ON from OFF, and the driver brake fluid pressure Pd is generated in the master cylinder 111 according to the brake pedal stroke.

Also, the driver brake fluid pressure Pd and the actuator brake fluid pressure Pa are compared to each other. While the driver brake fluid pressure Pd is less than the actuator brake fluid pressure Pa (Pd<Pa), the deceleration command value A is calculated in the vehicle speed control unit 132 (refer to steps S401-S403), the brake actuator 121 generates the actuator brake fluid pressure Pa based on the deceleration command value A calculated, and control of decelerating the vehicle speed is continued.

Further, when the driver detaches the foot from the brake pedal 112 and the switch 114 is switched to OFF at time t_{brkoff2}, the vehicle speed control releasing signal B is made ON in the brake actuator 122 (refer to step S423), and the deceleration command value A is changed to the predetermined command value without deceleration in the vehicle speed control unit 132 that has received such the vehicle speed control releasing signal B (refer to step S404). Also, such the deceleration command value A is outputted to the brake actuator 122, and a process of decompressing the brake fluid pressure is executed in the brake actuator 122.

According to the vehicle speed control releasing process described above, because timing the driver detaches the foot from the brake pedal 150 and timing the vehicle speed control is released become simultaneous with each other, vehicle speed control can be released without making the driver feel interruption of deceleration.

Embodiment 1 described above has a constitution that the vehicle speed control unit 132 determines that the driver brake fluid pressure Pd generated by stepping of the brake pedal 112 by the driver exceeds the actuator brake fluid pressure Pa generated by the brake actuator 122, and is a control method that releases control without feeling interruption of deceleration by continuing brake control from time driver steps the brake pedal 112 and starts the vehicle speed control releasing process until when the driver brake fluid pressure Pd generated by stepping of the brake pedal by the driver exceeds the actuator brake fluid pressure Pa generated by the brake actuator.

On the other hand, in the present example, vehicle speed control can be released without making the driver feel interruption of deceleration by continuing brake control, and, by adopting a constitution of handing over the result of determination that the driver brake fluid pressure Pd generated from the brake actuator 122 by stepping of the brake pedal 112 by the driver has exceeded the actuator brake fluid pressure Pa generated by the brake actuator 112, even a case the brake actuator 122 is changed to one with another type can be responded without changing a process of the vehicle speed control unit 132.

### Embodiment 5

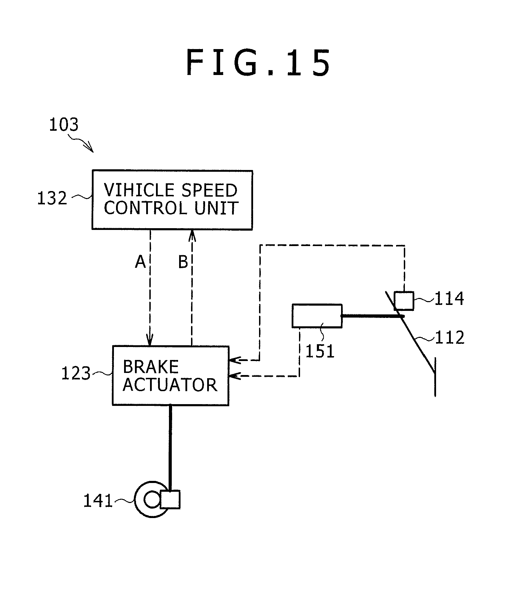

Next, embodiment 5 will be described below using Fig. 15-Fig. 17.
Fig. 15 is a drawing explaining a constitution of a travel control device in embodiment 5. Also, detailed description thereof will be omitted by attaching same reference signs to constitution elements similar to those of embodiment 4.

What is characteristic in the present example is that it is constituted that the driver brake fluid pressure Pd is generated in a brake actuator 123 according to pedal operation of the brake pedal 112.

In comparison to the constitution of embodiment 4 shown in Fig. 11, a travel control device 103 is constituted that the brake booster 113, the master cylinder 111, the master cylinder pressure sensor 115, and the brake fluid pressure sensor 116 are not there, and includes an operation amount detecting means 151.

The operation amount detecting means 151 is a stroke sensor detecting a pedal operation amount of the brake pedal 12 by the driver. The stroke sensor only has to be a device capable of detecting an operation amount of the driver such as a pressure sensor, an angle sensor, a position sensor of an input device, a variable resistor and the like.

An operation amount signal D of the brake pedal 112 is converted to an electric signal by the operation amount detecting means 151 and is transmitted to the brake actuator 123. Also, the signal the operation amount detecting means 151 converts is not only an electric signal but only has to be a signal of air pressure, oil pressure and the like with which the brake actuator 123 can detect the operation amount.

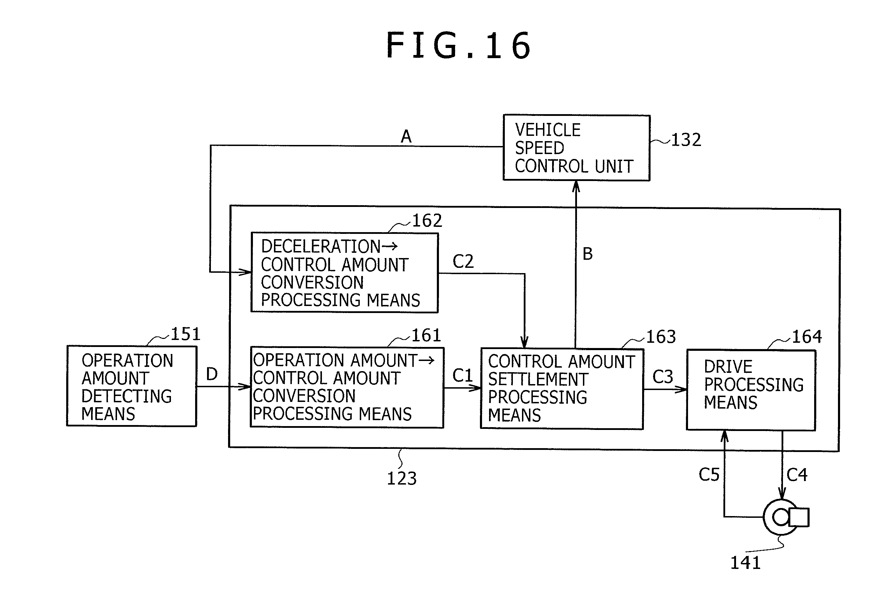

Next, a constitution of the brake actuator 123 will be described using Fig. 16.
Fig. 16 is a drawing showing a function constitution of the brake actuator in the present example.
The brake actuator 123 converts the pedal operation amount signal D of the driver detected by the operation amount detecting means 151 to a driver control amount C1 by an operation amount→control amount conversion processing means 161. Also, the deceleration command value A inputted from the vehicle speed control unit 132 is converted to a vehicle speed control unit control amount C2 by a deceleration→control amount conversion processing means 162. The driver control amount C1 and the vehicle speed control unit control amount C2 only have to be a physical quantity for driving a brake such as brake fluid pressure, force, torque, electric current, voltage and the like. Either one of the driver control amount C1 and the vehicle speed control unit control amount C2 is selected by a control amount settlement processing means 163 and is outputted to a drive processing means 164 as a final target value C3.

The control amount settlement processing means 163 transmits the vehicle speed control releasing signal B to the vehicle speed control unit 132 when conditions described below have been established. When the vehicle speed control releasing signal B is received from the brake actuator 123, the vehicle speed control unit 132 makes the deceleration command value A the predetermined command value without deceleration.
Thereby, the driver control amount C1 comes to be selected when the vehicle speed control releasing signal B has been outputted, whereas the vehicle speed control unit control amount C2 comes to be selected when the vehicle speed control releasing signal B has not been outputted. In the drive processing means 164, a process of controlling a control amount C4 of the brake 141 is executed so that a state amount C5 fed back from the brake 141 agrees with the final target value C3.

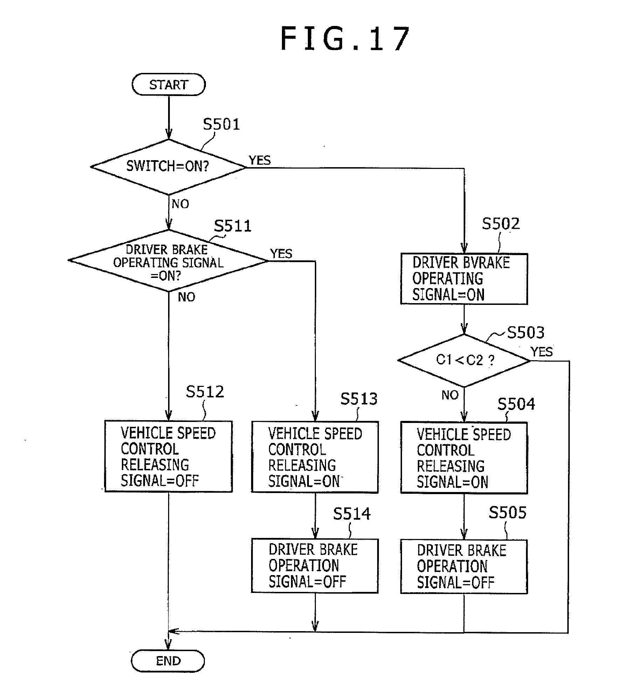

Next, a process in the control amount settlement processing means 163 will be described using Fig. 17.
First, whether a signal of the switch 114 is ON or not is determined in step S501. When it is determined to be ON (YES in step S501), it is determined that pedal operation of stepping the brake pedal 112 has been executed by the driver, and the process goes to step S502 and subsequent steps.

In step S502, a process of making the driver brake operation signal ON is executed. Also, in step S503, a process of comparing the vehicle speed control unit control amount C2 and the driver control amount C1 to each other is executed.

Further, when it is determined that the driver control amount C1 is less than the vehicle speed control unit control amount C2 (YES in step S503), the process is finished as it is. Accordingly, in the brake actuator 123 , the vehicle speed control unit control amount C2 is selected as the final target value C3, and a process of controlling the control amount C4 of the brake 141 is executed so that the state amount C5 agrees with the final target value C3. Accordingly, in the brake 141, a brake force according to the deceleration command value A from the vehicle speed control unit 132 is generated.

On the other hand, when it is determined that the driver control amount C1 is equal to or greater than the vehicle speed control unit control amount C2 (C1≥C2) (NO in step S503), the process goes to step S504, and a process of making the vehicle speed control releasing signal B ON is executed.

When the vehicle speed control releasing signal B is made ON in step S504, in the vehicle speed control unit 132, the deceleration command value A is set to the predetermined command value without deceleration (refer to step S404 in Fig. 12). Also, the step goes to step S505, and the process is finished after a process of making the driver brake operation signal OFF is executed in step S415.

Also, when it is determined that the detection signal of the switch 114 is not ON in step S501 (NO in step S501), the process goes to step S511, and whether the driver brake operation signal is ON or not is determined.

Here, when it is determined that the driver brake operation signal is OFF (NO in step S511), the process goes to step S512, and a process of making the vehicle speed control releasing signal B OFF is executed.

When the vehicle speed control releasing signal B is made OFF in step S512, in the vehicle speed control unit 132, whether it is in the middle of vehicle speed control or not is determined, and, when it is in the middle of vehicle speed control, the deceleration command value A is calculated and is outputted to the brake actuator 123. Accordingly, in the brake actuator 123, when it is in the middle of vehicle speed control, vehicle speed control is executed based on the deceleration command value A, whereas when it is not in the middle of vehicle speed control, nothing is executed.

On the other hand, when it is determined that the driver brake operation signal is ON in step S511 (YES in step S511), the process goes to step S513, and the vehicle speed control releasing signal B is made ON in step S513.

When the vehicle speed control releasing signal B is made ON in step S513, in the vehicle speed control unit 132, the deceleration command value A is set to the predetermined command value without deceleration (refer to step S404 of Fig. 12). Also, the process goes to step S514, and the process is finished after a process of making the driver brake operation signal OFF is executed in step S514.

According to the constitution described above, when brake operation by the driver is executed while the deceleration command value A is outputted from the vehicle speed control unit 132, brake control by control of the vehicle speed control unit 132 is continued until the pedal operation amount of the driver exceeds the deceleration command value A of the vehicle speed control unit 132, and therefore a phenomenon that deceleration is weakened instantaneously when the driver executes pedal operation of the brake pedal 112 can be prevented.

Also, in examples 1-5 described above, the cases control of the brake actuator 121, 122, 123 was executed by the deceleration command value A were described; however, control may be executed using a brake fluid pressure command value. Further, the driver may be notified of release of travel control by executing either or both of sounding a buzzer (not illustrated) or putting off an operation display lamp (not illustrated) that is lit and displays operation of the vehicle speed control unit 131, 132 when the switch 114 becomes ON.

The present invention is not limited to the embodiments described above, and various alterations are possible within a range not departing from the object of the present invention. For example, in the embodiments described above, description was made with an example of the case a means supplying the brake fluid pressure to the brake 141 was the master cylinder 111 and the brake actuator, however, a regenerative brake of a traveling motor may be used.

### [List of Reference Signs]

101, 102, 103...travel control device
111...master cylinder
121, 122, 123...brake actuator
131, 132...vehicle speed control unit
141...brake
151...operation amount detecting means
161...operation amount→control amount conversion processing means
162...deceleration→control amount conversion processing means
163...control amount settlement processing means
164...drive processing means
Pa...actuator brake fluid pressure (control brake force)
Pd...driver brake fluid pressure (operation brake force)
A...deceleration command value
B...vehicle speed control releasing signal
C1...driver control amount
C2...vehicle speed control unit control amount
C3...final target value
D...pedal operation amount signal

## Claims

1. A travel control device, comprising:
a vehicle speed controlling means that executes vehicle speed control of a vehicle; and
a vehicle speed control releasing means that releases vehicle speed control by the vehicle speed controlling means by pedal operation of a brake pedal, wherein
when the pedal operation is executed during vehicle speed control that decelerates the vehicle speed by the vehicle speed controlling means, the vehicle speed control releasing means compares an operation brake force by the pedal operation and a control brake force by the vehicle speed controlling means to each other, vehicle speed control decelerating vehicle speed is continued by the vehicle speed controlling means while the operation brake force is less than the control brake force, and vehicle speed control by the vehicle speed controlling means is released when the operation brake force becomes equal to or greater than the control brake force.

2. The travel control device according to claim 1, wherein
when the pedal operation is finished in the middle of continuing vehicle speed control that decelerates vehicle speed by the vehicle speed controlling means, the vehicle speed control releasing means gradually reduces the control brake force and releases vehicle speed control by the vehicle speed controlling means.

3. The travel control device according to claim 1 or 2, further comprising:
a deceleration command value calculating means that calculates a deceleration command value that decelerates a vehicle;
a control brake force generating means that generates the control brake force based on a deceleration command value calculated by the deceleration command value calculating means;
an operation brake force generating means that generates the operation brake force according to a stepping amount of the brake pedal by the pedal operation; and
a pedal operation detecting means that detects presence or absence of the pedal operation, wherein
when presence of pedal operation has been detected by the pedal operation detecting means during vehicle speed control by the vehicle speed controlling means, the vehicle speed control releasing means compares the operation brake force and the control brake force to each other, makes the deceleration command value calculating means calculate a deceleration command value and outputs the deceleration command value to the control brake force generating means when the operation brake force is less than the control brake force, and sets the deceleration command value to "without deceleration" and outputs the deceleration command value to the control brake force generating means when the operation brake force is equal to or greater than the control brake force.

4. The travel control device according to claim 3, wherein
when the operation brake force is less than the control brake force, the vehicle speed control releasing means holds a deceleration command value calculated by the deceleration command value calculating means immediately before presence of the pedal operation is detected by the pedal operation detecting means and outputs the deceleration command value to the control brake force generating means.

5. The travel control device according to claim 3, wherein
when the operation brake force is less than the control brake force, the vehicle speed control releasing means holds a deceleration command value calculated by the deceleration command value calculating means immediately before presence of the pedal operation is detected by the pedal operation detecting means and outputs the deceleration command value to the control brake force generating means, and changes the deceleration command value so that the control brake force gradually reduces after predetermined time elapses after the pedal operation is detected and outputs the deceleration command value to the control brake force generating means.

6. The travel control device according to any one of claim 1 to claim 5, wherein
the control brake force generating means comprises a brake actuator cylinder; and
the operation brake force generating means comprises a master cylinder.

7. The travel control device according to claim 1 or 2, further comprising:
a deceleration command value calculating means that calculates a deceleration command value that decelerates a vehicle;
a deceleration control amount converting means that converts a deceleration command value calculated by the deceleration command value calculating means to a vehicle speed control unit control amount;
an operation amount detecting means that detects a pedal operation amount of a brake pedal;
an operation amount control amount converting means that converts a pedal operation amount detected by the operation amount detecting means to a driver control amount;
a pedal operation detecting means that detects presence or absence of the pedal operation;
a control amount settlement processing means that compares the driver control amount and the vehicle speed control unit control amount to each other when presence of pedal operation has been detected by the pedal operation detecting means, selects the vehicle speed control unit control amount while the driver control amount is less than the vehicle speed control unit control amount, and selects the driver control amount when the driver control amount becomes equal to or greater than the vehicle speed control unit control amount; and
a drive processing means that controls a control amount of a brake so that a state amount fed back from a brake agrees with the vehicle speed control unit control amount or the driver control amount selected by the control amount settlement processing means.

8. The travel control device according to any one of claim 1 to claim 7 further comprising:
a display device that displays whether vehicle speed control is executed or not by the vehicle speed controlling means.

9. The travel control device according to any one of claim 1 to claim 8, wherein
inclusion of a buzzer that notifies release of the vehicle speed controlling means is notified.
